# EUROPEAN PATENT APPLICATION

(11) **EP 2 722 683 A1**
(43) Date of publication of application: **23.04.2014**
(21) Application number: 12189122.0
(22) Date of filing: 18.10.2012
(51) Int. Cl.: G01S 5/02, G01S 19/48

(54) **Generating An Elevation Model Using Mobile Devices**

(71) Applicant: BlackBerry Limited, Waterloo, ON N2K 0A7 (CA)
(72) Inventor: Buchanan, Nathan Daniel Pozniak, Waterloo, Ontario N2L 3W8 (CA); Oliver, Robert George, Waterloo, Ontario N2L 3W8 (CA); Parco, Adam Louis, Waterloo, Ontario N2L 3W8 (CA)
(74) Representative: Patel, Binesh

(57) **Abstract**

A computer-implemented method comprises collecting three-dimensional location data for a plurality of locations using one or more mobile devices, wherein the location data includes coordinates of latitude and longitude and further includes corresponding altitude data and generating an elevation model based on the three-dimensional location data. Once the elevation model is generated, it is possible to identify which floor of a building the device is located on. This enables delivery of floor-specific location-based services to mobile devices inside multi-storey buildings.

## Description

### TECHNICAL FIELD

The present technology relates generally to mobile devices and, in particular, to techniques for determining elevation using mobile devices.

### BACKGROUND

Location-aware mobile devices may offer a variety of different types of location-based services (LBS). A recurring challenge for LBS is determining a sufficiently accurate position for the mobile device. Outdoors, GPS (or other GNSS) positioning is generally considered to be sufficiently accurate for most LBS applications. Indoors, however, where GPS receivers may lose reception, positioning may not be possible, inhibiting the delivery of LBS. One proposed solution is to triangulate cellular signals or to triangulate RF signals from interior (in-building) transmitters. Triangulation of either cellular or in-building signals generally lacks sufficient positional accuracy to be useful for many LBS applications. Furthermore, in-building techniques require installation of transmitters, and may also require that the devices have additional hardware and/or software for position determination. Therefore, there is a need for a new or improved technique for determining the elevation of a mobile device in order to deliver LBS to the device, especially elevation-specific LBS that is to be delivered to a device inside a building where GNSS reception is poor or nonexistent.

### BRIEF DESCRIPTION OF THE DRAWINGS

Further features and advantages of the present technology will become apparent from the following detailed description, taken in combination with the appended drawings, in which:

FIG. 1 is a depiction of a mobile device on which the present technology may be implemented, the depiction including a schematic depiction of some components of the mobile device;

FIG. 2 is a flowchart depicting a computer-implemented method of generating an elevation model in accordance with an implementation of the present technology;

FIG. 3 is a depiction of a plurality of mobile devices collecting three-dimensional location data for generating an elevation model;

FIG. 4 depicts an elevation map of an elevation model;

FIG. 5 depicts a user interface of a mobile device displaying elevation-specific or floor-specific location-based services (LBS); and

FIG. 6 is a flowchart of a method of generating an atmospheric model for use in determining elevation based on pressure sensor data.

It will be noted that throughout the appended drawings, like features are identified by like reference numerals.

### DETAILED DESCRIPTION

The present technology provides a novel way for one or a group of mobile devices to collect location data for the purposes of generating, or causing to be generated, an elevation model of a geographical area. This elevation model is then used to determine an elevation of a mobile device, e.g. a floor on which the mobile device is located, especially in cases where GPS or GNSS reception is not possible inside a building. This elevation information enables the delivery or elevation-specific or floor-specific location-based services (LBS).

Accordingly, one aspect of the present technology is a computer-implemented method of collecting three-dimensional location data for a plurality of locations using one or more mobile devices, wherein the location data includes coordinates of latitude and longitude and further includes corresponding altitude data, and generating an elevation model based on the three-dimensional location data.

Another aspect of the present technology is a computer-readable medium comprising instructions in code which when loaded into a memory and executed by a processor of a mobile device cause the mobile device to perform the method of the preceding paragraph.

Another aspect of the present technology is a computing device for generating an elevation model for a geographical area, the computing device comprising a communication port for receiving three-dimensional location data for a plurality of locations from one or more mobile devices, wherein the location data includes coordinates of latitude and longitude and further includes corresponding altitude data, and a processor coupled to a memory for generating an elevation model based on the three-dimensional location data.

Yet another aspect of the present technology is a mobile device for collecting data to enable generation of an elevation model for a geographical area, the mobile device comprising a position-determining subsystem for generating three-dimensional location data including coordinates of latitude and longitude in addition to altitude data, and a processor operatively coupled to a memory to receive the location data and to cause the elevation model to be generated.

Still a further aspect of the present technology is a system for generating an elevation model for a geographical area. The system includes a plurality of mobile devices that collect three-dimensional location data including coordinates of latitude and longitude in addition to altitude data. The mobile devices transmit the location data to a computing device (e.g. a server) that then generates the elevation model for the geographical area based on the location data collected by the mobile devices. The elevation model for the geographical area may then be shared with the mobile devices and/or used to deliver location-based services (LBS) such as floor-specific LBS to mobile devices situated within multi-storey buildings.

The details and particulars of these aspects of the technology will now be described below, by way of example, with reference to the drawings.

By way of overview, the present technology provides a mobile device, computer-readable medium and computer-implemented method for generating an atmospheric model using pressure and location data (that includes altitude data) collected using sensors on the device.

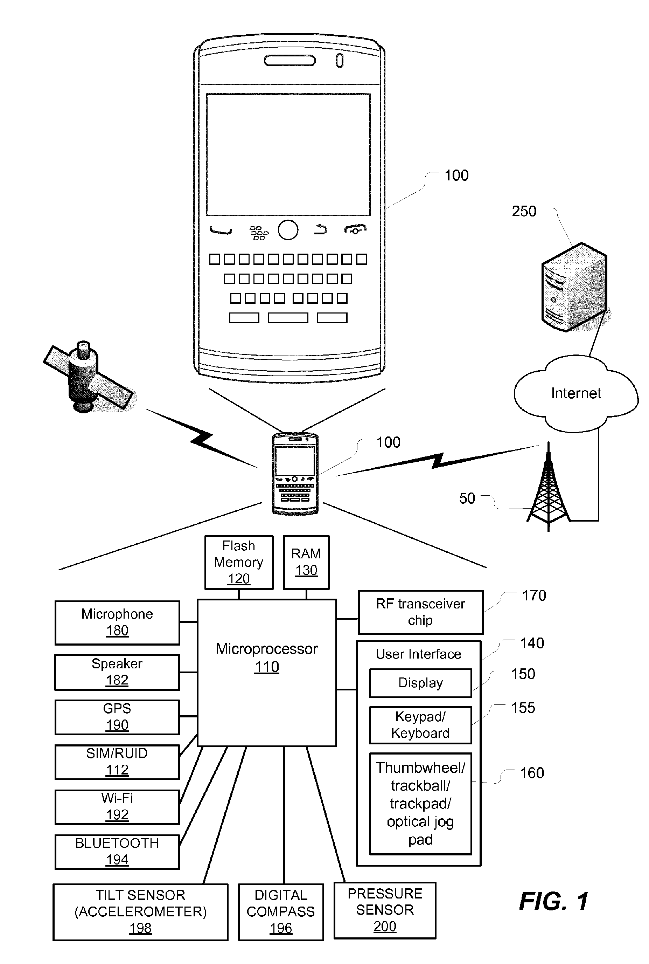

FIG. 1 is a depiction of a wireless communications device as one example of a mobile device that may be used to implement this novel technology. This mobile device, which is generally designated by reference numeral 100, includes a processor 110 and memory 120, 130 for executing one or more applications. The memory may include flash memory 120 and/or random access memory (RAM) 130. Other types or forms of memory may be used.

As depicted by way of example in FIG. 1, the mobile device 100 includes a user interface 140 for interacting with the device and its applications. The user interface 140 may include one or more input/output devices, such as a display screen 150 (e.g. an LCD or LED screen or touch-sensitive display screen), and a keyboard or keypad 155. The user interface may also include an optical jog pad 160 and/or a thumbwheel, trackball, track pad or equivalent.

As depicted by way of example in FIG. 1, the mobile device 100 includes a transceiver 170 for communicating with other devices. The transceiver 170 may be a radiofrequency (RF) transceiver for wirelessly communicating with one or more base stations over a cellular wireless network using cellular communication protocols and standards for both voice calls and packet data transfer such as GSM, CDMA, GPRS, EDGE, UMTS, LTE, etc.

The mobile device 100 may include a Subscriber Identity Module (SIM) card 112 for GSM-type devices or a Re-Usable Identification Module (RUIM) card for CDMA-type devices. The RF transceiver 170 may include separate voice and data channels.

The mobile device 100 may also include one or more ports for wired connections, e.g. USB, HDMI, FireWire (IEEE 1394), etc.

The mobile device 100 includes a speech-recognition subsystem that has a microphone 180 for transforming voice input in the form of sound waves into an electrical signal. The electrical signal is then processed by a speech-recognition module (digital signal processor) to determine keywords or phrases from the voice input. Optionally, the mobile device 100 may include a speaker 182 and/or an earphone jack.

Optionally, the mobile device 100 may also include a position-determining subsystem such as a Global Positioning System (GPS) receiver 190 (e.g. in the form of a chip or chipset) for receiving GPS radio signals transmitted from one or more orbiting GPS satellites. Any other Global Navigation Satellite System (GNSS), such as GLONASS or Galileo, may be used for satellite-based positioning. Other position-determining subsystems or techniques may be used, including radiolocation techniques, signal trace techniques, Wi-Fi™ positioning system (WPS), etc. Any combination of these subsystems or techniques may also be used to provide a position fix (current location data) for the device. The position-determining subsystem may provide an altitude reading in addition to latitude and longitude coordinates. For example, GNSS receivers such as a GPS receiver can compute a GPS altitude from signals from four orbiting satellites.

Optionally, the mobile device 100 may include a Wi-Fi™ transceiver 192, a Bluetooth® transceiver 194, and/or a near-field communications (NFC) chip. The computing device 100 may also optionally include a transceiver for WiMax™ (IEEE 802.16), a transceiver for ZigBee® (IEEE 802.15.4-2003 or other wireless personal area networks), an infrared transceiver or an ultra-wideband transceiver.

Optionally, the mobile device may include other sensors like a digital compass 196 and/or a tilt sensor or accelerometer 198.

The altitude data or altitude measurements may be made using the GPS receiver 190 (another type of GNSS receiver or any other suitable position-determining subsystem capable of providing three-dimensional location data that includes latitude and longitude coordinates in addition to altitude). Alternatively, for indoor or in-building positioning, where GPS or GNSS reception is inadequate, a pressure sensor 200 may be used to determine the altitude or elevation although, as will elaborated below, the altitude data determined by the pressure sensor must be compensated or adjusted to take into consideration the local atmospheric pressure variations caused by weather.

The pressure sensor 200 may be a micro-sensor or micro-electromechanical system (MEMS) embedded inside the mobile device. For example, the pressure sensor may be a piezo-resistive pressure sensor with an IC interface such as, for example, the LPS331AP MEMS pressure sensor manufactured and sold by STMicroelectronics NV. This sensor has an absolute pressure range of 260 to 1260 mbar and a resolution of 0.020 mbar RMS. Alternatively, the MEMS pressure sensor may be a BMP180 from Bosch Sensortec GmbH. Any other equivalent pressure sensor may be used. In a variant, an external pressure sensor may be connected to the mobile device via a wired or wireless connection. The pressure sensor 200 provides pressure signals or pressure data to the processor 110 and memory 120, 130 of the mobile device 100, for example, via the IC interface.

The position-determining subsystem 190 may thus include or cooperate with the pressure sensor 200 for generating three-dimensional location data, especially when the mobile device is in indoors (inside a building). The location data thus provides coordinates of latitude and longitude in addition to altitude data. In other words, the location data includes both a horizontal measurement and a vertical measurement. The processor and memory of the mobile device receive the location data from the subsystem 190 and/or pressure sensor 200 and cause the elevation model to be generated, either locally on the mobile device or remotely on a computing device 250, which may be a server, server cluster, another mobile device, or a group of mobile devices, or any combination thereof. Thus, in one embodiment, the processor is configured to cause an radiofrequency transceiver to transmit the location data to another computing device 250 for generation of the elevation model. In another embodiment, the processor is configured to generate the elevation model.

Generating the elevation model may be done, in one implementation, by clustering altitude data based on location (within a predetermined radius or distance tolerance). This clustering may be performed by the mobile device 100 or by the other remote computing device 250. Clustering the altitude data enables the mobile device 100 or computing device 250 to identify ground-level measurements and off-the-ground measurements taken at an elevation above ground level. A height of a building or other manmade structure may then be determined based on the measurements. By applying assumptions about the average height of a typical floor, or by noting the discrete elevations, the number of floors in the building may be estimated. This information may be added to the elevation model. The elevation model thus serves as a three-dimensional model or earth relief model of a geographical area.

The processor of the mobile device 100 and/or the computing device 250 can then determine a floor where the mobile device is currently located. Location-based services (LBS) for a specific floor of the building can be requested and/or received.

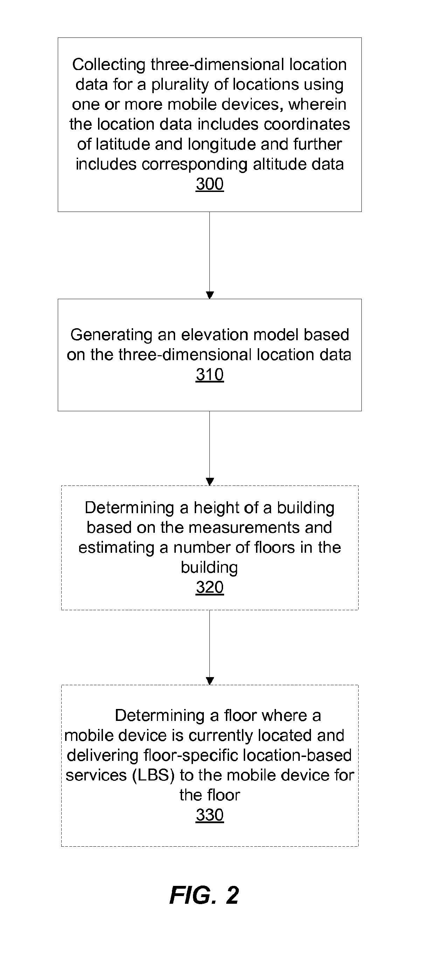

This novel method of generating an elevation model is summarized in FIG. 2 as follows. As depicted in FIG. 2, the method entails a step 300 of collecting three-dimensional location data for a plurality of locations using one or more mobile devices, wherein the location data includes coordinates of latitude and longitude and further includes corresponding altitude data. The method then entails a step 310 of generating an elevation model based on the three-dimensional location data. The method then optionally includes a step 320 of determining a height of a building based on the measurements and estimating a number of floors in the building. The method then optionally includes a step 330 of determining a floor where a mobile device is currently located and delivering floor-specific location-based services (LBS) to the mobile device for the floor.

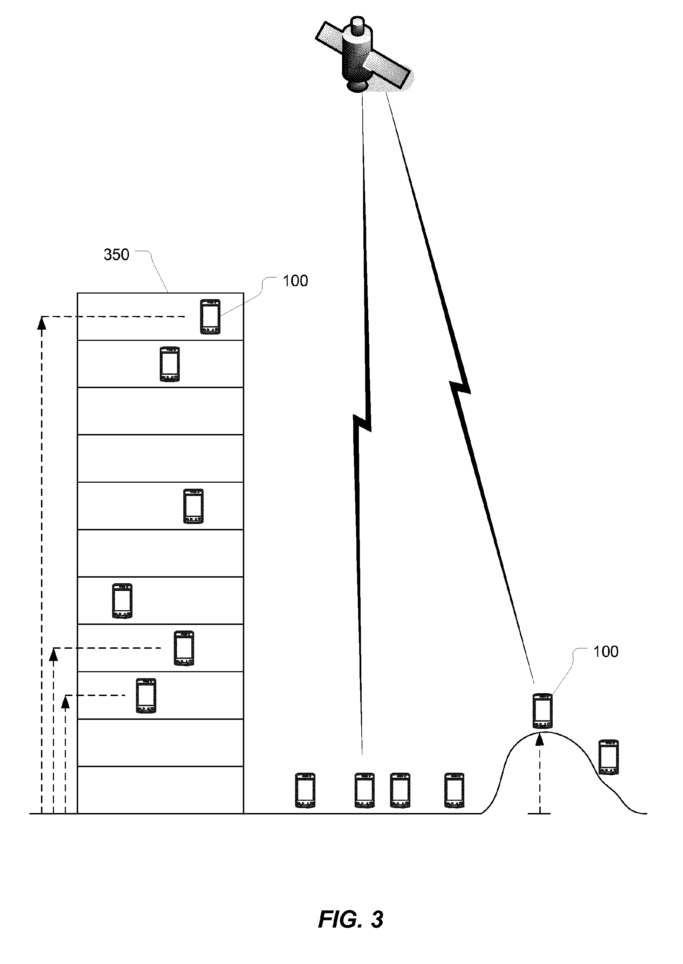

FIG. 3 depicts an example in which a plurality of mobile devices 100 collect three-dimensional location data both on the ground and off-the-ground (i.e. inside a building). The three-dimensional location data may be determined from GNSS signals or from weather-adjusted pressure data. Based on data collected over time, a height of a building can be estimated. Based on either standard or typical floor heights, or the vertical clustering of pressure data within a building, the number of floors can be determined for a given building. This information may be stored in the elevation model.

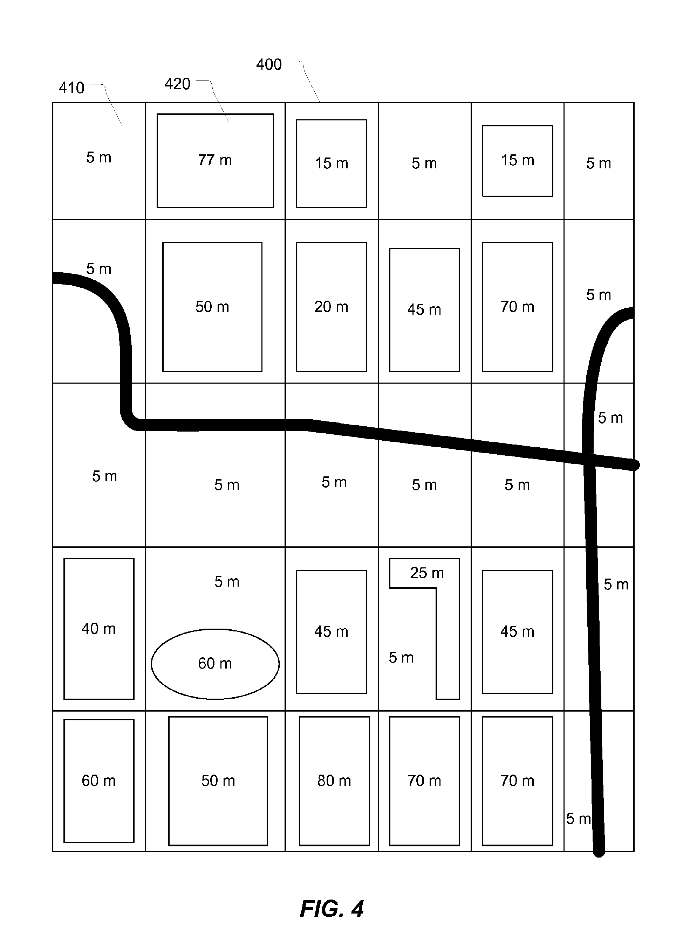

An elevation map 400 based on the elevation model may be generated and optionally also displayed as shown by way of example in FIG. 4. In this example, the elevation map 400 of an urban area includes some blocks that are at ground level 410 (e.g. parking lots, parks, unused land, etc.). These are indicated in this example as being at an elevation of 5 m above sea level. The tops 420 of buildings and other habitable structures in the area are indicated with their height or maximum elevation.

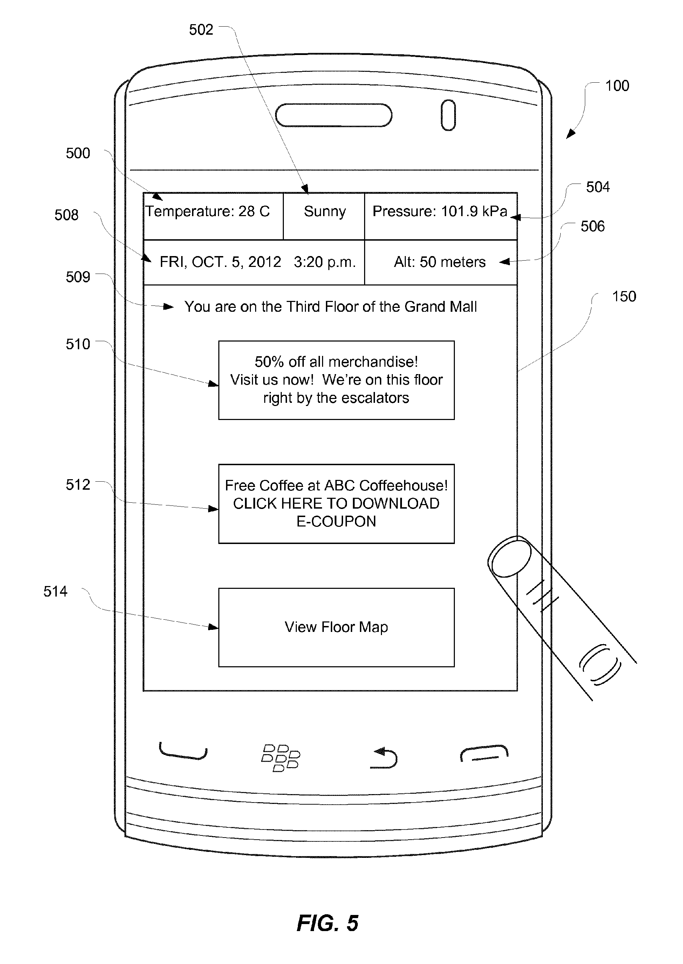

FIG. 5 depicts a user interface (UI) of a mobile device 100 that is displayed on a display screen 150. The UI displays floor-specific location-based services (LBS) in accordance with aspect of this technology. As shown in the example depicted in FIG. 5, the UI may include a weather indicator 502, a pressure reading 504, an altitude reading 506, a date and time display 508, and a floor indicator 509. Some example of location-based services are displayed on the UI. For example, the mobile device may display location-based advertising (LBA) 510, a user-selectable interface element to download an e-coupon 512, and a user-selectable interface element to view a floor map 514. The location-based advertising and location-based services are floor-specific. The floor determination may be made based on a pressure reading from a pressure-sensing mobile device 100, knowledge of the prevailing weather conditions from the atmospheric model, and the number of floors in the building where the device is located. This technique thus enables the vertical localization of a mobile device, i.e. determining a floor where a mobile device is currently located. For example, it may be determined that the device is on the fifth floor or the tenth floor. Once the floor is known, floor-specific location-based services (LBS) may be delivered to the mobile device. For example, a multi-level or multi-storey shopping mall may wish to deliver floor-specific location-based advertising to mobile devices. As another example, an office tower may wish to have LBS for one company or tenant on a one floor or group of floors and different LBS for another tenant on a different floor or group of floors. This technology thus enables the precise vertical localization of a mobile device that cannot receive GNSS signals so as to provide floor-specific LBS.

The generation of the elevation model may be done by the mobile device that is collecting the data or by a group (ad hoc network) of mobile devices that is collecting and sharing data amongst each other. The generation of the elevation model may also be done by a computing device, e.g. a server, server cluster, cloud, etc. that receives via a communication port the three-dimensional location data for a plurality of locations from one or more mobile devices. The computing device has a processor coupled to a memory for generating the elevation model based on the three-dimensional location data.

As noted above, where the mobile device is indoors and unable to receive GNSS signals, a pressure sensor 200 provides the altitude data. This altitude data is adjusted or compensated for local weather conditions.

The weather conditions may be obtained over the air from a conventional weather service linked to ground-based weather stations, from airborne weather stations, or from any other source of weather data. In another implementation, the weather data may be obtained from a localized weather model or atmospheric model generated using pressure and location data obtained by mobile devices in the area. The latter implementation is useful where the weather stations are far from the current location where the pressure sensor data is to be weather-compensated.

The atmospheric model may be generated by any computing device or group of devices such as the mobile device based on data collected by mobile devices in the area, the data, a group of mobile devices, a server, a server cluster or a cloud computing environment. One technique thus entails obtaining an atmospheric model for the geographical area to compensate pressure measurements obtained by the pressure sensor, the atmospheric model being generated based on location and pressure data collected by mobile devices in the geographical area. These may be the same mobile devices that provide the elevation data or other group of devices or a subset or superset of the devices.

The altitude data obtained by the devices may be AMSL or GPS Altitude. These concepts, and some related altitude concepts, are now reviewed to facilitate understanding of this novel technology.

*Above Mean Sea Level* (AMSL) is the absolute height above the point where the sea level would be if a trench was dug from that point to the sea and sea water was permitted to pass freely between the sea and the trench. This is a gravity-based definition such as the one defined in the Earth Gravitational Model (EGM96).

*GPS Altitude* is the altitude above or below the WGS84 ellipsoid, a model of the Earth used by GPS. Similar models are used in most GNSS systems. As pressure changes with gravity, GPS altitudes must be converted to AMSL altitudes before applying atmospheric equations.

*ISO*/*US*/*ICAO Standard Atmosphere* is the standard atmospheric model assuming no weather, and the following conditions at 0 AMSL: 15C, 101325Pa, 1.98C/1000ft lapse rate.

*Pressure Altitude* is the altitude calculated from pressure assuming ICAO standard atmosphere. No corrections are made for weather or temperature.

*Estimated AMSL Altitude* is the altitude calculated from pressure correcting for temperature and local weather (high/low pressure regions). This value should equal AMSL Altitude.

Users expect to see AMSL Altitude, that is, a constant altitude for a fixed point that corresponds to a reference point such as sea level. The absolute pressure sensor provides a pressure reading from which Pressure Altitude is easily calculated. Unfortunately, Pressure Altitude may have up to 1000ft of difference from AMSL Altitude, depending on the current weather, making this value behave differently than expected by the user.

Given a weather model, the Estimated AMSL Altitude can be calculated from the pressure for the current location - this is equal to the desired AMSL Altitude.

It is also possible to obtain an AMSL Altitude and location from GPS (or other position-determining sources such as cellular triangulation, Wi-Fi positioning, NFC, or manual input.) depending on the accuracy of the specific source. In the case of GPS, the altitude would be converted from GPS Altitude to AMSL Altitude.

In general terms, the mobile device 100 generates the atmospheric model by determining an Above Mean Sea Level (AMSL) altitude using a position-determining subsystem (e.g. GPS receiver 190) and determining a pressure altitude using the pressure sensor 200, calculating a difference or delta between the pressure altitude and the AMSL altitude, and then calculating a temperature at sea level based on the AMSL altitude and the pressure altitude, as will be elaborated below. The calculation of the temperature at sea level may be accomplished in one implementation by performing a linear regression on an equation AMSL altitude = offset + ScaleFactor * PressureAltitude to solve for the offset and the ScaleFactor and by then estimating the temperature at sea level as 1-ScaleFactor = (T-15)/3. Thereafter, the atmospheric model for pressure is generated based on the AMSL altitude and temperature at altitude using a lapse rate of 1.98C/1000ft (6.5C per km).

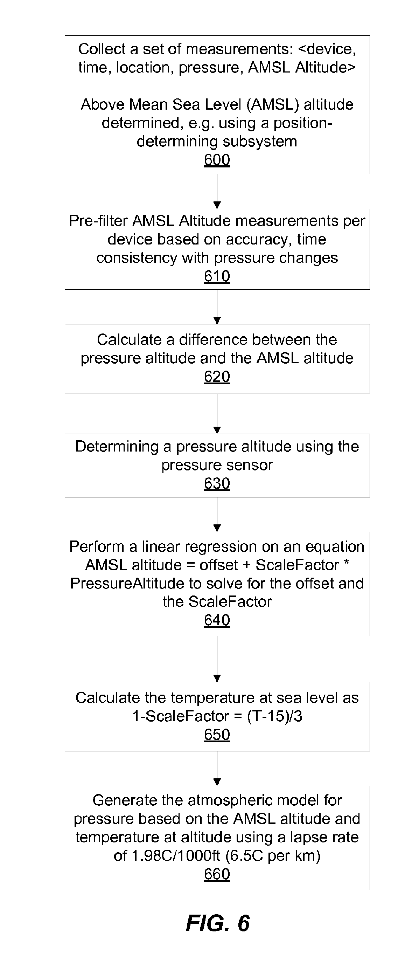

Generating the atmospheric model may proceed as depicted in the flowchart of FIG. 6:

1. Collect a set of measurements: <device, time, location, pressure, AMSL Altitude>, as shown in step 600. The AMSL altitude may be determined at substep 361 using a position-determining subsystem, e.g. a GPS receiver capable of providing GPS altitude. The GPS position fix may be aided or assisted using Assisted GPS or Aided GPS. The pressure readings obtained using the pressure sensor 200 provide the Pressure Altitude at substep 610.

2. Pre-filter AMSL Altitude measurements per device based on accuracy, time consistency with pressure changes (i.e. reject inconsistent readings), as shown in step 620.

3. For each device, as shown in step 630, calculate or estimate the difference between Pressure Altitude and AMSL Altitude for short periods (assuming the mean location). This difference corresponds to the weather effect and the temperature effect combined, and provides an altimeter setting for that time, location, and altitude.

a) The weather effect is a constant offset, independent of the altitude.

b) The temperature effect is a scale factor on altitude proportional to temperature.

4. As weather effects (low pressure/high pressure regions) usually extend over a large area (which can be any arbitrary area, e.g. ∼100km² or a 100 km radius or any other area which may be user-configurable), and are generally assumed to be slow to change, choose a set of measurements over the approximate 100km² area and over about 0.5 to 1 hour (i.e. 30-60 minutes) or any other suitable time period, which is also user-configurable. Then perform a linear regression (step 640) on the equation AMSL Altitude = offset + ScaleFactor * PressureAltitude and solve for offset and ScaleFactor.

5. Calculate or approximate the temperature at sea level as 1-ScaleFactor = (T-15)/3 at step 650. In another embodiment, a different ScaleFactor equation may be substituted.

6. This produces at step 660 a model for pressure: AMSL Altitude and temperature at altitude (1.98C/1000ft) lapse rate, i.e. 6.5C per km, which is constant up to an altitude of 11km. In another embodiment, a different lapse rate may be used.

In one embodiment, the processor of the mobile device is configured to determine the AMSL altitude by obtaining a GPS altitude reading from the GPS receiver 190 in the mobile device. The processor is configured to then convert the GPS altitude to the AMSL altitude.

The processor is then configured to determine weather conditions using the atmospheric model for the purposes of compensating for the effect of weather (i.e. weather-related variations in barometric pressure) on the pressure readings of the pressure sensor. The pressure readings are particularly important for mobile devices that are inside multi-storey buildings that inhibit the reception of GPS (or other GNSS) signals from orbiting satellites.

The data that contribute to the generation of the elevation model may derive from a single mobile device or, more efficiently, from a group or plurality of mobile devices that together constitute an ad hoc network of mobile devices. Computations for the generation of the model may be performed on a server or on one or more of the mobile devices or any combination thereof.

In the foregoing embodiments, the atmospheric model is generated for a localized area, e.g. 100 square km, by using pressure readings from mobile devices within that localized area. In another embodiment, atmospheric models for adjoining areas may be combined to form larger scale models or composite models of multiple adjoining areas. In other words, a first atmospheric model for a first area may be combined, joined or aggregated with a second atmospheric model for a second area. This concept may be extrapolated so that a plurality of atmospheric models for a plurality of contiguous or adjoining areas are combined or aggregated to produce a large-scale composite atmospheric model covering a much larger area. In theory, this technique may be used to generate a model for all habited areas of the Earth where mobile users are situated.

The geographical area for the elevation model may or may not correspond to the area for the atmospheric model. Likewise, the mobile devices that provide the atmospheric model may not necessarily be the same as the devices that provide the elevation model.

Any of the methods disclosed herein may be implemented in hardware, software, firmware or any combination thereof. Where implemented as software, the method steps, acts or operations may be programmed or coded as computer-readable instructions and recorded electronically, magnetically or optically on a fixed or non-transitory computer-readable medium, computer-readable memory, machine-readable memory or computer program product. In other words, the computer-readable memory or computer-readable medium comprises instructions in code which when loaded into a memory and executed on a processor of a computing device cause the computing device to perform one or more of the foregoing method(s).

A computer-readable medium can be any means that contain, store, communicate, propagate or transport the program for use by or in connection with the instruction execution system, apparatus or device. The computer-readable medium may be electronic, magnetic, optical, electromagnetic, infrared or any semiconductor system or device. For example, computer executable code to perform the methods disclosed herein may be tangibly recorded on a computer-readable medium including, but not limited to, a floppy-disk, a CD-ROM, a DVD, RAM, ROM, EPROM, Flash Memory or any suitable memory card, etc. The method may also be implemented in hardware. A hardware implementation might employ discrete logic circuits having logic gates for implementing logic functions on data signals, an application-specific integrated circuit (ASIC) having appropriate combinational logic gates, a programmable gate array (PGA), a field programmable gate array (FPGA), etc.

This invention has been described in terms of specific embodiments, implementations and configurations which are intended to be exemplary only. Persons of ordinary skill in the art will appreciate, having read this disclosure, that many obvious variations, modifications and refinements may be made without departing from the inventive concept(s) presented herein. The scope of the exclusive right sought by the Applicant(s) is therefore intended to be limited solely by the appended claims.

## Claims

1. A computer-implemented method comprising:
collecting three-dimensional location data for a plurality of locations using one or more mobile devices, wherein the location data includes coordinates of latitude and longitude and further includes corresponding altitude data; and
generating an elevation model based on the three-dimensional location data.

2. The method as claimed in claim 1 wherein generating the elevation model comprises clustering the altitude data based on location to identify ground-level measurements and off-the-ground measurements taken at an elevation above ground level.

3. The method as claimed in claim 2 further comprising determining a height of a building based on the measurements and estimating a number of floors in the building.

4. The method as claimed in claim 3 further comprising:
determining a floor where a mobile device is currently located; and
delivering floor-specific location-based services (LBS) to the mobile device for the floor.

5. The method as claimed in any one of claims 1 to 4 comprising determining altitude data from a pressure sensor in the mobile device by compensating for local weather conditions.

6. A computing device for generating an elevation model for a geographical area, the computing device comprising:
a communication port for receiving three-dimensional location data for a plurality of locations from one or more mobile devices, wherein the location data includes coordinates of latitude and longitude and further includes corresponding altitude data; and
a processor coupled to a memory for generating an elevation model based on the three-dimensional location data.

7. The computing device as claimed in claim 6 wherein the processor is configured to cluster the altitude data based on location to identify ground-level measurements and off-the-ground measurements taken at an elevation above ground level.

8. The computing device as claimed in claim 7 wherein the processor is configured to determine a height of a building based on the measurements and estimating a number of floors in the building.

9. The computing device as claimed in claim 8 wherein the processor is configured to:
determine a floor where a mobile device is currently located; and
cause floor-specific location-based services (LBS) to be delivered to the mobile device.

10. The computing device as claimed in any one of claims 6 to 9 wherein the altitude data derives from a pressure sensor in the mobile device and is compensated for local weather conditions.

11. A mobile device for collecting data to enable generation of an elevation model for a geographical area, the mobile device comprising:
a position-determining subsystem for generating three-dimensional location data including coordinates of latitude and longitude in addition to altitude data; and
a processor operatively coupled to a memory to receive the location data and to cause the elevation model to be generated.

12. The mobile device as claimed in claim 11 wherein the processor is configured to cause an radiofrequency transceiver to transmit the location data to another device for generation of the elevation model.

13. The mobile device as claimed in claim 12 wherein the processor is configured to generate the elevation model by clustering altitude data based on location to identify discrete elevations corresponding to floors of a building.

14. The mobile device as claimed in claim 13 wherein the processor determines a floor where the device is currently located and then requests location-based services (LBS) for a specific floor of the building.

15. The mobile device as claimed in any one of claims 11 to 14 further comprising a pressure sensor for determining the altitude data.

## Amended claims

### Amended claims in accordance with Rule 137(2) EPC.

**1.** A computer-implemented method comprising:
collecting three-dimensional location data for a plurality of locations using a plurality of mobile devices, wherein the location data includes coordinates of latitude and longitude and further includes corresponding altitude data; and
generating an elevation model based on the three-dimensional location data by clustering the altitude data based on location to identify ground-level measurements and off-the-ground measurements taken at an elevation above ground level.

**2.** The method as claimed in claim 1 further comprising determining a height of a building based on the measurements and estimating a number of floors in the building.

**3.** The method as claimed in claim 2 further comprising:
determining a floor where one of the mobile devices is currently located; and
delivering floor-specific location-based services (LBS) to the mobile device for the floor.

**4.** The method as claimed in any one of claims 1 to 3 comprising determining altitude data from a pressure sensor in each of the mobile devices by compensating for local weather conditions.

**5.** A computing device for generating an elevation model for a geographical area, the computing device comprising:
a communication port for receiving three-dimensional location data for a plurality of locations from a plurality of mobile devices, wherein the location data includes coordinates of latitude and longitude and further includes corresponding altitude data; and
a processor coupled to a memory for generating an elevation model based on the three-dimensional location data by clustering the altitude data based on location to identify ground-level measurements and off-the-ground measurements taken at an elevation above ground level.

**6.** The computing device as claimed in claim 5 wherein the processor is configured to determine a height of a building based on the measurements and estimating a number of floors in the building.

**7.** The computing device as claimed in claim 6 wherein the processor is configured to:
determine a floor where one of the mobile devices is currently located; and
cause floor-specific location-based services (LBS) to be delivered to the mobile device.

**8.** The computing device as claimed in any one of claims 5 to 7 wherein the altitude data derives from a pressure sensor in each of the mobile devices and is compensated for local weather conditions.

**9.** A system of mobile devices for collecting data to enable generation of an elevation model for a geographical area, each mobile device comprising:
a position-determining subsystem for generating three-dimensional location data including coordinates of latitude and longitude in addition to altitude data; and
a processor operatively coupled to a memory to receive the location data and to cause the elevation model to be generated by clustering the altitude data based on location to identify ground-level measurements and off-the-ground measurements taken at an elevation above ground level.

**10.** The system of mobile devices as claimed in claim 9 wherein the processor of each mobile device is configured to cause a radiofrequency transceiver to transmit the location data to another one of the mobile devices for generation of the elevation model.

**11.** The system of mobile devices as claimed in claim 10 wherein the processor determines a floor where one of the mobile devices is currently located and then requests location-based services (LBS) for a specific floor of the building.

**12.** The system of mobile devices as claimed in any one of claims 9 to 11 wherein each mobile device comprises a pressure sensor for determining the altitude data.
